# EUROPÄISCHE PATENTSCHRIFT

(11) **EP 0 750 007 B1**
(45) Veröffentlichungstag und Bekanntmachung des Hinweises auf die Patenterteilung: **27.12.2000**
(21) Anmeldenummer: 96109778.9
(22) Anmeldetag: 18.06.1996
(51) Int. Cl.: C08J 9/28, C08J 3/09

(54) **Verfahren zur Herstellung von sphärischen Mikropartikeln auf Celluloseacetat-Basis**
Process for producing spherical microparticles on the basis of cellulose acetate
Procédé de préparation de microparticules sphériques à base d'acétate de cellulose

(30) Priorität: 19.06.1995 DE 19522181
(43) Veröffentlichungstag der Anmeldung: 27.12.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: Wagenknecht, Wolfgang, 14513 Teltow (DE); Fanter, Carola, 14513 Teltow (DE); Loth, Fritz, 14513 Teltow (DE)

(56) Entgegenhaltungen:
- US-A- 1 400 196
- DATABASE WPI Section Ch, Week 8418 Derwent Publications Ltd., London, GB; Class A97, AN 84-112578 XP002012484 & SU-A-1 031 966 (KAUN POLY) , 30.Juli 1983
- DATABASE WPI Section Ch, Week 8314 Derwent Publications Ltd., London, GB; Class A11, AN 83-34042K XP002012485 & SU-A-931 727 (KAUN POLY) , 30.Mai 1982

## Beschreibung

Die Erfindung betrifft ein Verfahren zur Herstellung von sphärischen Mikropartikeln auf Celluloseacetat-Bais gemäß Oberbegriff des Anspruches 1 sowie das nach dem Verfahren hergestellte Produkt.

Es ist bekannt, mit der Herstellung von Celluloseacetat-Mikrokugeln mehr oder weniger poröse perlförmige Celluloseformkörper vorgeben zu können, die als chromatographisches Material als Träger für Enzyme, Zellen und andere Liganden, z.B. nach Aktivierung und Koppelung von Proteinen, erhebliche Bedeutung erlangt haben.

Das Grundprinzip dieser über Celluloseacetat-Perlen als Zwischenprodukte verlaufenden Verfahren zur Herstellung von Perlcellulose besteht darin, daß Cellulosetriacetat in einem Halogenkohlenwasserstoff, insbesondere dem leichtflüchtigen Dichlormethan, gelöst wird, die Polymerlösung in einem Schutzkolloide und Tenside enthaltenden wäßrigen Dispersionsmedium emulgiert wird und durch Verdunsten des Lösungsmittels die Celluloseacetat-Tröpfchen koaguliert werden. Nach Abtrennung der Celluloseacetat-Teilchen erfolgt dann in der Regel die Abspaltung der Acetatgruppen durch Behandlung mit Natronlauge (JP 53-7759). Da bei diesem Prozeß meist nur relativ große und sehr dichte unporöse Teilchen erhalten werden, wurde eine Vielzahl von Verfahren vorgeschlagen, die u.a. die Reduzierung der Teilchengröße auf < 50 µm (DE-OS 41 06 623; JP 94-145202), vor allem jedoch die Erhöhung der Porosität der resultierenden Produkte zum Ziel hatten. Die meisten dieser Verfahren basieren darauf, daß der eingesetzten Cellulosetriacetatlösung geeignete Porenbildner zugesetzt werden, wie z.B. lineare aliphatische Alkohole (JP 56-24429; JP 56-24430; JP 62-267339; JP 63-68645; US-PS 4,312,938), Hexan, Cyclohexan, Petrolether, Toluen u.ä. (Motazo u.a.: Nippon Kagaku Kaishi (1984)5, 722-727; J.Chromatogr. 298 (1984)3, 499-507), anorganische Säuren oder Basen (EP 47 064 und US-PS 4,390,691, JP 62-253601, JP 62-277401), Wasser (JP 63-83144), Polyvinylacetat (Hirayama u.a.: Kobunshi Ronbunshu 39(1982)10, 597-604; Motozato u.a.: J. Chromatogr. 298(1984)3, 499-507) oder langkettige aromatische Carbonsäuren oder Carbonsäureester (JP 63-68645).

Zur Herstellung von Cellulosekugeln auf Cellulosediacetat-Basis ist es auch bekannt, Lösungsmittelgemische aus Dichlormethan und einem Alkohol wie z.B. Ethanol, 1-Pentanol oder 1-Hexanol oder Dichlormethan/Alkohol/Ester-Mischungen einzusetzen (JP 94-136175).

Alle diese Verfahren haben jedoch den entscheidenden Nachteil, daß sie die toxischen und umweltschädigenden Halogenkohlenwasserstoffe als hauptsächliche Lösungsmittelkomponente verwenden.

In den Druckschriften SU 931 727 und SU 1 031 966 wird die Erzeugung von Perlcullulose mit einem Durchmesser von 68 bis 1000 µm und einer Porosität von 79 bis 91 % aus 4- bis 14%igen Cellulosediacetatlösungen in einer Ethylacetat/n-Butanol-Mischung (9:1) unter Verwendung einer 1- bis 3%igen Polyvinylalkohollösung als Dispersionsmedium beschrieben. Die Koagulation wird dabei entweder durch Erwärmen auf 75 bis 95°C oder durch Zugabe von Ölsäure als Fällungsmittel vorgenommen und anschließend in wäßriger 0,15 n NaOH verseift.

Die wesentlichen Nachteile dieser halogenkohlenwasserstofffreien Verfahren bestehen darin, daß weder eine gezielte Einstellung der Porosität < 75% noch die Herstellung mikrofeiner Teilchen < 65 µmm möglich ist. Weitere Nachteile ergeben sich dadurch, daß das Verfahren zu erheblichen Deformationen, Verklebungen und Perlaggregationen sowie zu einer ungleichmäßigen Porenstruktur unter Bildung von großen Hohlräumen in den Perlen bis hin zu Hohlkörpern führt, wodurch die Ausbeute an definierten brauchbaren Partikeln reduziert bzw. ein Aufschwimmen bei der Füllung von chromatographischen Säulen verursacht wird. Die Zugabe eines wasserunlöslichen Fällungsmittels wie Ölsäure (SU 1031966) erfordert zusätzliche Auswaschprozesse mit organischen Lösungsmitteln, was ebenfalls von Nachteil ist.

Ein weiteres Verfahren zur Herstellung poröser kugelförmiger Celluloseacetat-Teilchen ohne Verwendung von Halogenkohlenwasserstoffen ist in der DE-OS 35 02 329 offenbart, indem Celluloseacetat mit einem Substitutionsgrad von 2 bis 2,8 in einem Essigsäure/Wasser-Gemisch (80/20 bis 90/10 Masseteile) gelöst und die Lösung in ein Fällbad aus Essigsäure/Wasser (30/70 bis 40/60 Masseteile) gesprüht oder getropft wird, wobei nachteiligerweise keine mikrofeinen, sondern nur relativ große und meist stark deformierte Partikel breiter Größenverteilung gebildet werden.

Die Herstellung von 300 bis 600 µm großen Cellulosepartikeln enger Partikelgrößenverteilung durch Eindüsen einer auf 145°C erhitzten 12,5%igen Cellulosediacetatlösung in DMSO/Propylenglykol (4:6) aus 250-µm-Düsen mit aufgeprägter Schwingung in ein aus Wasser und Methanol bestehendes Koagulationsbad ist in der japanischen Patentschrift JP 01-275641 beschrieben. Auch hier besteht der Nachteil darin, daß nur große deformierte Teilchen erhalten werden.

Auch das Eindüsen oder Eintropfen von in Aceton/DMSO oder anderen Lösungsmittel-Zusammensetzungen gelöstem Celluloseacetat in Wasser führt nur zu relativ großen kugelförmigen Celluloseacetatperlen breiter Verteilung, wobei es sehr schwierig ist, Deformationen und Verklebungen zu vermeiden (US-PS 4,090,022; US-PS 4,064,017; DE-OS 27 17 965).

Zusammenfassend ist hinsichtlich der Nachteile der bisher bekannten Verfahren zur Herstellung von sphärischen Partikeln aus Celluloseacetaten festzustellen, daß bisher Mikropartikel im Teilchengrößenbereich von 0,1 bis 50 µm nur unter Verwendung von ökologisch sehr bedenklichen Halogenkohlenwasserstoffen erzeugt werden können. Zur Einstellung der Partikelporosität und/oder Verbesserung der Einheitlichkeit der Teilchengrößenverteilung werden zumeist wasserunlösliche Additive wie organische Lösungsmittel oder Polymere der Celluloseacetatlösung zugesetzt, die anschließend aus der gebildeten Mikroperle unter Verwendung organischer Lösungsmittel ausgewaschen werden müssen. Bei halogenkohlenwasserstofffreien Systemen wird nur die Bildung relativ großer Partikel ohne Einstellung der Porosität in einem breiten Bereich beschrieben, wobei die bekannten Verfahren zumeist zu deformierten, teilweise verklebten oder hohlen Partikeln führen.

Aufgabe der vorliegenden Erfindung ist es daher, ein technisch einfaches und ökonomisch vorteilhaftes Verfahren zur Herstellung von hydroxylgruppenhaltigen Celluloseacetat- oder Cellulose-Mikrokugeln vorzugeben, mit einer engen Teilchengrößenverteilung im Bereich von 0,1 bis 100 µm unter Verwendung von nicht oder wenig toxischen und ökologisch verträglichen Lösungsmitteln anstelle der sehr bedenklichen Halogenkohlenwasserstoffe, und es soll die Porosität der Mikrokugeln ohne Einsatz höhermolekularer organolöslicher Additive, die anschließend aus den gebildeten Mikroperlen meist unter Verwendung organischer Lösungsmittel ausgewaschen werden müssen und teilweise schwer entfernbar sind, einstellbar sein.

Erfindungsgemäß wird diese Aufgabe dadurch gelöst, daß Celluloseacetat in einem aus zwei oder mehreren Komponenten bestehenden halogenkohlenwasserstofffreien leicht flüchtigen Lösungsmittelgemisch gelöst wird, dessen Komponenten allein kein Lösungsmittel für das betreffende Celluloseacetat darstellen, wobei mindestens eine der Komponenten nicht oder nur begrenzt im wäßrigen Dispersionsmedium löslich ist und die Siede temperatur der Komponenten unterhalb der Siede temperatur des Wassers liegt, anschließend diese Lösung im wäßrigen Medium, welches ein wasser lösliches Salz und/oder mindestens eine der Lösungs mittelkomponenten enthält, dispergiert wird und die entstandenen Polymer partikel durch Abdunsten der Lösungsmittel zuerst Koaguliert und dann vom Dispersionsmedium abgetrennt werden, wobei die Celluloseacetat-Mikroperlen in an sich bekannter Weise gereinigt und isoliert werden.

Dabei können zur Herstellung der halogenkohlenwasserstofffreien Lösung des Celluloseacetats das Celluloseacetat und die Lösungskomponenten in beliebiger Reihenfolge zusammengegeben und das Celluloseacetat in dem Lösungmittelgemisch gelöst werden. Beispielsweise kann zuerst das Lösungsmittelgemisch hergestellt und dann das Celluloseacetat zugegeben und gelöst werden oder auch zuerst eine Komponente des Lösungsmitelgemisches mit dem Celluloseacetat gemischt, anschließend die übrigen Komponenten des Lösungsmittelgemisches zugegeben und das Celluloseacetat dann in dem Lösungsmittelgemisch gelöst werden.

Vorteilhafte Ausbildungen des Verfahrens sind in den Unteransprüchen beschrieben.

Überraschenderweise wurde gefunden, daß durch Zumischung eines Teils der Lösungsmittelkomponente und/oder eines Salzes zum wäßrigen Dispersionsmedium nicht nur die Porosität und die morphologische Struktur, sondern auch die Teilchengrößenverteilung in starkem Maße beeinflußt und gesteuert werden kann.

Die Konzentration der Celluloseacetatlösung ist in weiten Grenzen je nach der angestrebten Teilchengröße variierbar, wobei zur Herstellung der erfindungsgemäßen Mikrokugeln mit Teilchengrößen von 0,1 bis 100 µm Lösungen von Celluloseacetat mit einem DurchschnittsSubstitutionsgrad von 1,5 bis 2,7 mit 0,5 bis 30 Masse-%, vorzugsweise mit 2 bis 15 Masse-%, geeignet sind. Zweckmäßigerweise werden dem Dispersionsmedium wasserlösliche Schutzkolloide, wie z.B. wasserlösliche Cellulosederivate, z.B. Methylcellulose, Methylcellulosemischether, Carboxymethylcellulose u.ä. oder Polyvinylalkohol, Gelatine und/oder geeignete Emulgatoren wie nichtionische Tenside aus der Gruppe der Polyoxyethylenalkylether, -arylalkylether oder -sorbitanalkylester zugesetzt. Vorteilhafterweise kann bei einem sehr geringen Volumenverhältnis von wäßrigem Dispersionsmedium zu Polymerlösung bis nahezu 1:1 gearbeitet werden.

Zur Vergleichmäßigung und Erzeugung sehr kleiner Teilchengrößen ist es vorteilhaft, intensiv wirkende Dispergiergeräte wie Kolloidmühlen, hochtourig laufende Mischer oder auch Ultraschallgeräte während oder nach dem Eintrag der Celluloseacetatlösung in das Dispersionsmedium einzusetzen und anschließend die Zerteilung mit einem üblichen Rührer aufrechtzuerhalten.

Das Verdampfen der Lösungsmittelkomponenten unter Verfestigung der Polymerpartikel erfolgt nach dem Dispergierprozeß der Celluloseacetatlösung zweckmäßigerweise durch Überleiten eines Gasstroms wie z.B. Luft oder Stickstoff. Die erforderlichen Verdampfungszeiten richten sich vor allem nach der Menge der zu verdampfenden organischen Lösungsmittelkomponenten, Intensität des Gasstromes und der Verdampfungstemperatur, wobei letztere zwischen Raumtemperatur (ca. 10 bis 30°C) und maximal 1°C unterhalb der Siedetemperatur der niedrigsiedenden Lösungsmittelgemische gewählt werden kann. Die gegebenenfalls gewünschte Erhöhung des Hydroxylgruppengehaltes im Oberflächenbereich bis hin zur vollständigen Deacetylierung kann entweder nach dem Verdampfungsprozeß durch Zugabe von konzentrierter, insbesondere 10 bis 45 Masse-% NaOH enthaltender wäßriger Natronlauge oder nach Isolierung der Mikrokugeln durch Absaugen auf einer Fritte oder Zentrifugation und anschließender Wäsche mit Wasser, vorzugsweise in 0,05 bis 10 Masse-% NaOH enthaltendem Ethanol, während 0,1 bis 24h im Temperaturbereich von 10 bis 50°C durchgeführt werden. Die cellulosischen Hydroxylgruppen der erfindungsgemäßen Celluloseacetat- oder Cellulose-Mikrokugeln können anschließend aktiviert und gegebenenfalls über Spacer mit den unterschiedlichsten Liganden, wie z.B. Proteinen, Lecitinen, Farbstoffen usw. in vorteilhafter Weise gekoppelt werden.

Die Vorteile des erfindungsgemäßen Verfahrens bestehen u.a. darin, daß keine umweltschädigenden Halogenkohlenwasserstoffe als Lösungsmittel eingesetzt werden, daß ökonomisch und ökologisch vorteilhafte Komponenten verwendet werden, die eine chemisch unveränderte Wiedergewinnung erlauben, und daß bei relativ hohen Polymerkonzentrationen und gleichzeitig bei geringem Volumenverhältnis von Dispersionsmedium zur Polymerlösung gearbeitet werden kann. Auch ist es besonders vorteilhaft, eine enge Teilchengrößenverteilung erzielen zu können und eine gezielte Einstellung der Porosität in weiten Grenzen ohne Zusatz von organolöslichen Porenbildnern zur Celluloseacetatlösung vornehmen zu können. Dadurch, daß die Aufarbeitung und Reinigung der Mikroperlen ausschließlich mit Wasser erfolgt, kann, ohne daß organische Lösungsmittel zur Entfernung wasserunlöslicher Additive erforderlich sind, eine besonders umweltfreundliche Verfahrensweise vorgegeben werden. Mit dem erfindungsgemäßen Verfahren ist es erstmals gelungen, sehr gleichmäßige Polymerkugeln ohne Deformationen und Verklebungen zu erzeugen und eine einfache partielle oder vollständige Verseifung nach Abdampfen der Lösungsmittelkomponenten mit Natronlauge direkt im Dispersionsmedium oder nach Isolierung und Reinigung zu ermöglichen, um z.B. aktivierbare, mehr oder weniger poröse perlförmige Celluloseformkörper zu gewinnen, die als chromatographisches Material als Träger für Enzyme, Zellen und andere Liganden, z.B. nach Aktivierung und Kopplung von Proteinen, geeignet sind.

Für das erfindungsgemäße Verfahren werden nachfolgend beispielhafte Ausführungen angegeben:

### Beispiel 1:

120 g Celluloseacetat (DS=2,45, entsprechend einem Essigsäuregehalt von 55 %) werden in einem Lösungsmittelgemisch, bestehend aus 1600 ml Ethylacetat und 280 ml Methanol aufgelöst. Die Polymerlösung wird bei Raumtemperatur in 4000 ml Wasser, das 24 g wasserlösliche Methylcellulose, 31 g Natriumacetat, 24 g Emulgator (Polyoxyethylen-p-t-alkylphenylether) und 520 ml Ethylacetat enthält, mit einem Rührwerk bei ca. 250 U/min in Kombination mit einem Ultraturrax bei ca. 12000 U/min dispergiert. Nach ca. 30 bis 45 min wird der Ultraturrax abgeschaltet und zur Verdampfung der organischen Lösungsmittel ein Luftstrom über die Dispersion geleitet, wobei die Temperatur innerhalb von 1 h auf 35°C und anschließend innerhalb von 5h auf 40 bis 45°C erhöht und bei dieser Temperatur weitergerührt wird. Die erhaltene Dispersion wird bei g = 2000 zentrifugiert und das Sediment durch wiederholtes Aufschlämmen und Abzentrifugieren fünfmal mit Wasser gewaschen.

Es werden sphärische hydroxylgruppenhaltige Celluloseacetat-Mikrokugeln erhalten, die zu 99 % im Teilchengrößenbereich von 1 bis 7 µm liegen und eine hochporöse Struktur aufweisen.

Das Sedimentationsvolumen beträgt 2,7 ml/g und das Porenvolumen an Meso- und Makroporen 55% (bestimmt mittels Ausschlußchromatographie, Zugänglichkeit für Glucose). Die Ausschlußgrenze liegt bei 2x10⁵ Dalton.

Nach Deacetylierung werden hochporöse Cellulose-Mikrokugeln erhalten, die zu 100 % im Teilchengrößenbereich von 1 bis 8 µm liegen und ein Sedimentationsvolumen von 3,5 ml/g aufweisen.

### Beispiel 2:

Es wird wie in Beispiel 1 verfahren, jedoch werden der wäßrigen Phase anstelle von 31 g Natriumacetat 48 g des Salzes und 800 ml Ethylacetat zugesetzt. Es werden sphärische hydroxylgruppenhaltige Celluloseacetat-Mikrokugeln erhalten, die zu 90 % im Teilchengrößenbereich von 4 bis 10 µm liegen. Das Sedimantationsvolumen beträgt 3,4 ml/g und das Porenvolumen an Meso- und Makroporen 65 %. Die Ausschlußgrenze liegt bei 2x10⁶ Dalton.

Nach Deacetylierung werden sehr poröse Cellulose-Mikrokugeln mit einer mittleren Teilchengröße von 7 µm, einem Sedimentationsvolumen von 3,6 ml/g und einem Porenvolumen von 68 % erhalten.

### Beispiel 3:

Es wird gemäß Beispiel 1 verfahren, jedoch werden zur Herstellung der Polymerlösung 160 g Celluloseacetat eingesetzt. Es werden hydroxylgruppenhaltige Celluloseacetat-Kugeln erhalten, die zu 90 % im Teilchengrößenbereich von 5 bis 90 µm liegen. Das Sedimentationsvolumen beträgt 2,4 ml/g und das Porenvolumen 48 %. Die Ausschlußgrenze liegt bei 2x10⁶ Dalton.

### Beispiel 4:

Es wird wie in Beispiel 1 verfahren, jedoch werden der wäßrigen Phase anstelle von 31 g Natriumacetat 48 g des Salzes und 280 ml Ethylacetat zugesetzt. Es werden sphärische hydroxylgruppenhaltige Celluloseacetat-Mikrokugeln erhalten, deren Teilchengrößen zu 95 % im Bereich von 1,5 bis 7 µm liegen. Das Sedimentationsvolumen beträgt 2,8 ml/g und das Porenvolumen an Meso- und Makroporen ca. 62 %. Die Ausschlußgrenze liegt bei 5x10⁵ Dalton.

Nach Deacetylierung werden poröse Cellulose-Mikrokugeln mit einer mittleren Teilchengröße von 4 µm erhalten.

### Beispiel 5:

Es wird gemäß Beispiel 1 verfahren, jedoch wird zur Auflösung des Celluloseacetats anstelle von Methanol Ethanol im Gemisch mit Ethylacetat eingesetzt. Es werden sphärische hydroxylgruppenhaltige Celluloseacetat-Mikrokugeln erhalten, deren Teilchengröße zu 90 % im Bereich von 1,5 bis 6 µm liegen und eine niedrige Porosität aufweisen. Das Sedimentationsvolumen beträgt 1,8 ml/g und das Porenvolumen 29 %.

Nach Deacetylierung werden Cellulose-Mikrokugeln geringer Porosität mit einer mittleren Teilchengröße von 3 µm, einem Sedimentationsvolumen von 2,2 ml/g und einem Porenvolumen von 20 % erhalten. Die Ausschlußgrenze liegt bei 5 x 10⁵ Dalton.

### Beispiel 6:

Es wird gemäß Beispiel 1 verfahren, jedoch werden zur Auflösung des Celluloseacetats anstelle von 1600 ml Ethylacetat und 280 ml Methanol ein Gemisch aus 1690 ml Ethylacetat und 190 ml n-Propanol und anstelle von 24 g Polyoxyethylen-p-t-alkylphenylether ein Tensidgemisch aus 12 g Polyoxyethylen-(23)-laurylether und 12 g Polyoxyethylen-(5)-nonylphenylether eingesetzt. Es werden sphärische hydroxylgruppenhaltige Celluloseacetat-Mikrokugeln mit Teilchengrößen im Bereich von 2 bis 20 µm und niedriger Porosität erhalten.

### Beispiel 7:

Es wird wie in Beispiel 1 verfahren, jedoch werden der wäßrigen Phase anstelle von 31 g Natriumacetat 96 g des Salzes zugesetzt. Es werden sphärische hydroxylgruppenhaltige Celluloseacetat-Mikrokugeln erhalten, deren Teilchengrößen zu 90 % im Bereich 8 bis 25 µm liegen. Das Sedimentationsvolumen beträgt 2,2 ml/g und das Porenvolumen 20 %.

Nach Deacetylierung werden Cellulose-Mikrokugeln geringer Porosität mit einer mittleren Teilchengröße von 15 µm, einem Sedimentationsvolumen von 2,9 ml/g und einem Porenvolumen von 25 % erhalten.

### Beispiel 8:

120 g Celluloseacetat (DS=1,88, entsprechend einem Essigsäuregehalt von 46,8 %) werden in einem Lösungsmittelgemisch, bestehend aus 1270 ml Methylacetat, 540 ml Methanol und 70 ml Wasser aufgelöst. Die Polymerlösung wird bei Raumtemperatur in 4000 ml Wasser, das 24 g wasserlösliche Methylencellulose, 32 g Natriumacetat, 24 g Tensid (Polyoxyethylen-(20)-sorbitanmonooleat) und 260 ml Ethylacetat enthält, wie in Beispiel 1 angegeben dispergiert und entsprechend weiterverfahren. Es werden sphärische hydroxylgruppenhaltige Celluloseacetat-Mikrokugeln mit einer mittleren Teilchengröße von 15 µm erhalten.

## Patentansprüche

1. Verfahren zur Herstellung von sphärischen Mikropartikeln auf Celluloseacetat-Basis, dadurch **gekennzeichnet,**
daß eine halogenkohlenwasserstofffreie Lösung von Celluloseacetat hergestellt wird, indem Celluloseacetat und mindestens zwei Komponenten, deren Siedetemperatur unterhalb der Siedetemperatur von Wasser liegt und die einzeln kein Lösungsmittel für Celluloseacetat sind und von denen mindestens eine nicht oder nur begrenzt mit Wasser mischbar ist, zusammengegeben und das Celluloseacetat in dem Lösungsmittelgemisch gelöst wird, anschließend diese Lösung in einem wäßrigen Medium, welches ein wasserlösliches Salz und/oder mindestens eine der Lösungsmittelkomponenten enthält, dispergiert wird und die entstandenen Polymerpartikel durch Abdunsten der Lösungsmittel zuerst koaguliert und dann vom Dispersionsmedium abgetrennt werden.

2. Verfahren nach Anspruch 1, dadurch gekennzeichnet, daß dem Dispersionsmedium Schutzkolloide zugesetzt werden.

3. Verfahren nach einem der Ansprüche 1 oder 2, dadurch gekennzeichnet, daß Celluloseacetat mit einem Durchschnittssubstitutionsgrad zwischen 1,5 und 2,7 verwendet wird.

4. Verfahren nach einem der Ansprüche 1 bis 3, dadurch gekennzeichnet, daß zur Dispersion der Celluloseacetatlösung intensiv wirkende Dispergiergeräte eingesetzt werden und die dadurch hergestellte dispersive Verteilung mittels eines Rührers aufrechterhalten wird.

5. Verfahren nach einem der Ansprüche 1 bis 4, dadurch gekennzeichnet, daß die Celluloseacetat-Mikrokugeln partiell oder vollständig verseift werden.

6. Verfahren nach Anspruch 5, dadurch gekennzeichnet, daß die Verseifung im Dispersionsmedium stattfindet.

7. Verfahren nach Anspruch 5, dadurch gekennzeichnet, daß die Verseifung nach der Isolierung und Reinigung der Celluloseacetat-Mikrokugeln erfolgt.

8. Verfahren nach Anspruch 1 und wenigstens einem der Unteransprüche, dadurch gekennzeichnet, daß Celluloseacetate mit einem Substitutionsgrad von 1,5 bis 2,7, insbesondere von 2,3 bis 2,6, verwendet werden.

9. Verfahren nach Anspruch 1 und wenigstens einem der Unteransprüche, dadurch gekennzeichnet, daß 0,5 bis 30 masse-%ige, insbesondere 2 bis 15 masse-%ige Celluloseacetatlösungen verwendet werden.

10. Verfahren nach Anspruch 1 und wenigstens einem der Unteransprüche, dadurch gekennzeichnet, daß als Lösungsmittel ein Gemisch, bestehend aus 1 bis 40 Volumen-% eines C1- bis C4-Alkohols, wie Methanol, Ethanol, Propanol oder Butanol und 60 bis 99 Volumen-% eines C2- bis C6-Carbonsäureesters, wie Methyl-, Ethyl-, Propyl- oder Butylacetat oder -formiat verwendet wird.

11. Verfahren nach Anspruch 1 und wenigstens einem der Unteransprüche, dadurch gekennzeichnet, daß dem wäßrigen Dispersionsmedium ein Schutzkolloid, vorzugsweise Methylcellulose, Methylcellulosemischether, Gelatine oder Polyvinylalkohol in einer Konzentration von 0,1 bis 3 Masse-%, insbesondere von 0,3 bis 1 Masse-%, bezogen auf das Dispersionsmedium, zugesetzt wird.

12. Verfahren nach Anspruch 1 oder wenigstens einem der Unteransprüche, dadurch gekennzeichnet, daß dem wäßrigen Dispersionsmedium ein Emulgator oder Emulgatorgemisch, insbesondere ein nichtionisches Tensid aus der Gruppe der Polyoxyethylenalkylether, -arylalkylether oder -sorbitantalkylester in einer Konzentration von 5 bis 30, vorzugsweise 10 bis 20 Masse-%, bezogen auf das eingesetzte Celluloseacetat, zugesetzt wird.

13. Verfahren nach Anspruch 1 oder wenigstens einem der Unteransprüche, dadurch gekennzeichnet, daß dem wäßrigen Dispersionsmedium ein wasserlösliches Salz, insbesondere Natriumacetat, in einer Konzentration von 0,1 bis 20, vorzugsweise 0,5 bis 5 Masse-%, bezogen auf das Dispersionsmedium, zugesetzt wird.

14. Verfahren nach Anspruch 1 oder wenigstens einem der Unteransprüche, dadurch gekennzeichnet, daß ein Volumenverhältnis von Celluloseacetatlösung zum wäßrigen Dispersionsmedium von 1:1 bis 1:10, insbesondere von 1:1,5 bis 1:5, vorgegeben wird.

15. Verfahren nach Anspruch 1 und wenigstens einem der Unteransprüche, dadurch gekennzeichnet, daß dem wäßrigen Dispersionsmedium vor der Zugabe der Polymerlösung eine oder mehrere der mit Wasser begrenzt mischbaren Lösungsmittelkomponenten in einer Konzentration von 1 bis 35 Masse-%, insbesondere 5 bis 20 Masse-%, bezogen auf das Dispersionsmedium, zugesetzt wird.

16. Verfahren nach Anspruch 1 oder wenigstens einem der Unteransprüche, dadurch gekennzeichnet, daß die Mikrotröpfchen der Celluloseacetatlösung durch Abdunsten der flüchtigen Lösungsmittelkomponenten bei Temperaturen von mindestens 1 °C unterhalb der Siedetemperatur des Lösungsmittelgemisches durch Überleiten eines Gasstromes, insbesondere von Luft oder Stickstoff, koaguliert werden.

17. Verfahren nach Anspruch 1 oder wenigstens einem der Unteransprüche, dadurch gekennzeichnet, daß die Celluloseacetatperlen durch Zentrifugation oder Filtration vom Dispersionsmedium abgetrennt, mit Wasser oder Ethanol oder Mischungen davon gewaschen und gegebenenfalls getrocknet werden.

18. Verfahren nach Anspruch 1 oder wenigstens einem der Unteransprüche, dadurch gekennzeichnet, daß die Celluloseacetatperlen durch Deacetylierung mit einem basischen Medium, insbesondere mit einer 1 bis 10 masse-%igen wäßrigen oder alkoholischen NaOH, oberflächlich oder quantitativ in Celluloseperlen überführt werden, wobei die Deacetylierung direkt im Dispersionsmedium oder nach Isolierung und Reinigung der Mikroperlen erfolgen kann.

## Claims

1. Method for producing spherical microparticles on the basis of cellulose acetate, *characterised in that* a solution of cellulose acetate which is free of halogenated hydrocarbons is produced, cellulose acetate and at least two components being mixed together, the boiling point of said components being below the boiling point of water and said components not being individually a solvent for cellulose acetate and at least one of which is not mixable with water or only in a restricted manner, and the cellulose acetate being dissolved in the solvent mixture, then this solution being dispersed in an aqueous medium, which contains a water-soluble salt and/or at least one of the solvent components, and the resultant polymer particles being firstly coagulated by evaporation of the solvents and then being separated from the dispersion medium.

2. Method according to claim 1, characterised in that protective colloids are added to the dispersion medium.

3. Method according to one of the claims 1 or 2, characterised in that cellulose acetate with an average degree of substitution between 1.5 and 2.7 is used.

4. Method according to one of the claims 1 to 3, characterised in that intensively acting dispersion tools are used to disperse the cellulose acetate solution and the dispersive distribution thus produced is maintained by means of an agitator.

5. Method according to one of the claims 1 to 4, characterised in that the cellulose acetate microballs are partly or totally saponified.

6. Method according to claim 5, characterised in that the saponification takes place in the dispersion medium.

7. Method according to claim 5, characterised in that the saponification is effected after segregation and cleaning of the cellulose acetate microballs.

8. Method according to claim 1 and at least one of the sub-claims, characterised in that cellulose acetates with a degree of substitution of 1.5 to 2.7, especially 2.3 to 2.6, are used.

9. Method according to claim 1 and at least one of the sub-claims, characterised in that cellulose acetate solutions of 0.5 to 30% by weight, especially 2 to 15% by weight, are used.

10. Method according to claim 1 and at least one of the sub-claims, characterised in that a mixture is used as solvent, comprising 1 to 40% by volume of a Cl to C4 alcohol, such as methanol, ethanol, propanol or butanol and 60 to 99% by volume of a C2 to C6 carbonic acid ester, such as methyl-, ethyl-, propyl- or butyl acetate or -formiate.

11. Method according to claim 1 and at least one of the sub-claims, characterised in that a protective colloid, preferably methylcellulose, methylcellulose mixed ether, gelatine or polyvinyl alcohol is added to the aqueous dispersion medium, in a concentration of 0.1 to 3% by weight, especially 0.3 to 1% by weight, relative to the dispersion medium.

12. Method according to claim 1 or at least one of the sub-claims, characterised in that an emulsifier or emulsifier mixture, especially a non-ionic surfactant from the group of polyoxyethylene alkylesters, -arylalkylethers or -sorbitanalkylesters, is added to the aqueous dispersion medium in a concentration of 5 to 30, preferably 10 to 20% by weight, relative to the cellulose acetate used.

13. Method according to claim 1 or at least one of the sub-claims, characterised in that a water-soluble salt, especially sodium acetate, is added to the aqueous dispersion medium, in a concentration of 0.1 to 20%, preferably 0.5 to 5% by weight, relative to the dispersion medium.

14. Method according to claim 1 or at least one of the sub-claims, characterised in that a volume ratio of cellulose acetate solution to aqueous dispersion medium of 1 : 1 to 1 : 10, especially 1 : 1.5 to 1 : 5, is preset.

15. Method according to claim 1 and at least one of the sub-claims, characterised in that, before adding the polymer solution to the aqueous dispersion medium, there is added thereto one or more of the solvent components, which are mixable with water in a restricted manner, in a concentration of 1 to 35% by weight, especially 5 to 20% by weight, relative to the dispersion medium.

16. Method according to claim 1 or at least one of the sub-claims, characterised in that the microdroplets of the cellulose acetate solution are coagulated by evaporation of the volatile solvent components at temperatures of at least 1 °C below the boiling point of the solvent mixture by passing over a gas stream, especially air or nitrogen.

17. Method according to claim 1 or at least one of the sub-claims, characterised in that the cellulose acetate beads are separated from the dispersion medium by centrifugation or filtration, are washed with water or ethanol or mixtures thereof and if necessary are dried.

18. Method according to claim 1 or at least one of the sub-claims, characterised in that the cellulose acetate beads are converted superficially or quantitatively into cellulose beads by deacetylation with a basic medium, especially with a 1 to 10% by weight, aqueous or alcoholic NaOH medium, the deacetylation being able to be effected directly in the dispersion medium or after segregation and cleaning of the microbeads.

## Revendications

1. Procédé de production de microparticules sphériques à base d'acétate de cellulose,
caractérisé en ce qu'
on produit une solution d'acétate de cellulose dépourvue d'hydrocarbures halogénés, en ajoutant de l'acétate de cellulose et au moins deux composants, dont la température d'ébullition se situe au-dessous de la température d'ébullition de l'eau et qui isolément ne sont pas un solvant de l'acétate de cellulose, et dont au moins un n'est pas miscible à l'eau, ou seulement de façon limitée, et on dissout l'acétate de cellulose dans le mélange de solvants, puis on disperse cette solution dans un milieu aqueux qui contient un sel soluble dans l'eau et/ou au moins un des composants solvants, et on coagule tout d'abord les particules de polymères apparues en faisant évaporer les solvants puis on les sépare du milieu de dispersion.

2. Procédé selon la revendication 1,
caractérisé en ce qu'
on ajoute au milieu de dispersion des colloïdes protecteurs.

3. Procédé selon l'une des revendications 1 ou 2,
caractérisé en ce qu'
on utilise de l'acétate de cellulose ayant un degré moyen de substitution compris entre 1,5 et 2,7.

4. Procédé selon l'une des revendications 1 à 3,
caractérisé en ce qu'
on utilise des appareils de dispersion agissant de façon intensive pour la dispersion d'acétate de cellulose, et en ce qu'on maintient la répartition de dispersion produite au moyen d'un agitateur.

5. Procédé selon l'une des revendications 1 à 4,
caractérisé en ce que
les microbilles d'acétate de cellulose sont partiellement ou entièrement saponifiées.

6. Procédé selon la revendication 5,
caractérisé en ce que
la saponification s'effectue dans le milieu de dispersion.

7. Procédé de dispersion selon la revendication 5,
caractérisé en ce que
la saponification s'effectue après l'isolation et le nettoyage des microbilles d'acétate de cellulose.

8. Procédé selon la revendication 1 et au moins une des revendications secondaires,
caractérisé en ce qu'
on utilise de l'acétate de cellulose ayant un degré de substitution de 1,5 à 2,7, en particulier de 2,3 à 2,6.

9. Procédé selon la revendication 1 et au moins l'une des revendications secondaires,
caractérisé en ce qu'
on utilise des solutions d'acétate de cellulose de 0,5 à 30 % massique, en particulier de 2 à 15 % massique.

10. Procédé selon la revendication 1 et au moins une des revendications secondaires,
caractérisé en ce qu'
on utilise comme solution un mélange constitué de 1 à 40 % en volume d'un alcool en C₁ à C₄, comme le méthanol, l'éthanol, le propanol ou le butanol et de 60 à 99 % en volume d'un ester d'acide carboxylique en C₂ à C₆, comme l'acétate ou le formiate de méthyle, d'éthyle, de propyle ou de butyle.

11. Procédé selon la revendication 1 et au moins une des revendications secondaires,
caractérisé en ce qu'
on ajoute au milieu de dispersion aqueux un colloïde protecteur, de préférence la méthylcellulose, les éthers mixtes de méthylcellulose, les gélatines ou l'alcool polyvinylique à une concentration de 0,1 à 3 % massique, en particulier de 0,3 à 1 % massique, par rapport au milieu de dispersion.

12. Procédé selon la revendication 1 ou au moins une des revendications secondaires,
caractérisé en ce qu'
on ajoute au milieu de dispersion aqueux un émulsifiant ou un mélange d'émulsifiants, en particulier un agent tensioactif non ionique du groupe des éthers d'alkyle, des éthers d'arylalkyle de polyoxyéthylène ou des esters d'alkyle sorbitane de polyoxyéthylène à une concentration de 5 à 30, de préférence de 10 à 20 % massique, par rapport à l'acétate de cellulose utilisé.

13. Procédé selon la revendication 1 ou au moins une des revendications secondaires,
caractérisé en ce qu'
on ajoute au milieu de dispersion aqueux un sel soluble dans l'eau, en particulier l'acétate de sodium, à une concentration de 0,1 à 20, de préférence de 0,5 à 5 % massique, par rapport au milieu de dispersion.

14. Procédé selon la revendication 1 ou au moins une des revendications secondaires,
caractérisé en ce qu'
on dispose un rapport volumique de la solution d'acétate de cellulose au milieu de dispersion aqueux de 1:1 à 1:10, en particulier de 1:1,5 à 1:5.

15. Procédé selon la revendication 1 et au moins une des revendications secondaires,
caractérisé en ce qu'
on ajoute au milieu de dispersion aqueux, avant l'addition de la solution de polymère, un ou plusieurs composants solvants miscibles à l'eau de façon limitée, à une concentration de 1 à 35 % massique, en particulier de 5 à 20 % massique, par rapport au milieu de dispersion.

16. Procédé selon la revendication 1 ou au moins une des revendications secondaires,
caractérisé en ce qu'
on coagule les micro-gouttelettes de la solution d'acétate de cellulose en faisant évaporer les composés solvants volatils à des températures situées à au moins 1°C en dessous de la température d'ébullition du mélange solvant en faisant passer un courant gazeux, en particulier de l'air ou de l'azote.

17. Procédé selon la revendication 1 ou au moins une des revendications secondaires,
caractérisé en ce qu'on sépare les billes d'acétate de cellulose par centrifugation ou filtration du milieu de dispersion, en ce qu'on les lave avec de l'eau ou de l'éthanol, ou des mélanges de ces corps, et en ce que le cas échéant on les sèche.

18. Procédé selon la revendication 1 ou au moins une des revendications secondaires,
caractérisé en ce qu'
on transforme les billes d'acétate de cellulose par désacétylation avec un milieu basique, en particulier avec NaOH aqueux ou alcoolique de 1 à 10 % massique, à leur surface, ou de façon quantitative, en billes de cellulose, la désacétylation pouvant s'effectuer directement dans le milieu de dispersion ou après isolement et nettoyage des microbilles.
